# EUROPEAN PATENT APPLICATION

(11) **EP 3 223 218 A1**
(43) Date of publication of application: **27.09.2017**
(21) Application number: 16204965.4
(22) Date of filing: 19.12.2016
(51) Int. Cl.: G06Q 20/12, G06Q 20/32

(54) **APPARATUS, METHOD AND RECORDING MEDIUM FOR ICON-BASED PURCHASE PROCESSING**

(30) Priority: 24.03.2016 KR 20160035488
(71) Applicant: SK Planet Co., Ltd., Seongnam-si, Gyeonggi-do 13487 (KR)
(72) Inventor: LIM, Jaewoo, 13566 Seongnam-si, Gyeonggi-do (KR)
(74) Representative: Isarpatent

(57) **Abstract**

An apparatus, method and recording medium are provided for icon-based purchase processing. In the method for icon-based purchase processing, a terminal creates an article icon associated with a purchasable article and stores a mapping correlation between identification information about the article icon and purchase information required for purchase of the article. Also, the terminal confirms a user's purchase intention depending on whether the article icon is selected. If the user's purchase intention is confirmed, the terminal performs purchase processing for the article, based on the purchase information, by interworking with a service apparatus for selling the article. Personalizing or customizing a purchase icon or a purchase hyperlink by using mapping.

## Description

### TECHNICAL FIELD

The present invention relates generally to purchase processing in electronic commerce and, more particularly, to an apparatus, method and recording medium for icon-based purchase processing which allows a quick purchase of a desired article in response to a user's selection of a specific icon corresponding to the desired article at a user's terminal.

### BACKGROUND

Details disclosed in this section merely offers background information regarding embodiments of the present invention. No determination has been made, and no assertion is made, as to whether any of the below might be applicable as prior art with regard to the present invention.

With the remarkable development of information communication technology, various kinds of terminals such as a mobile communication terminal and a personal computer are constantly evolving to perform a great variety of functions.

For example, today's mobile communication terminals not only provide a traditional voice communication function, but also offer various functions such as a data communication function, a digital camera function, a video playback function, a game function, an internet access function, and the like.

Additionally, a variety of services are now provided using such terminals, especially, using a smart phone, a tablet PC, or any other mobile device. An online-based electronic commerce service, also referred to as a social commerce service, is one of such services.

In a typical electronic commerce service, purchase processing is performed as follows: a visit of a shopping mall site, a search for a desired article, a move to a detailed page of a selected article, a selection of a buy button, an input of data required for purchase in a payment page, and a payment approval. Further, this processing is repeated in general even when the same article is purchased again.

This typical purchase processing requires many complicated steps such as moves to several pages and repeated inputs of the same data. Unfortunately, this causes a user considerable inconvenience.

### SUMMARY

In order to address the aforesaid or any other issue, the present invention provides a simplified, convenient and user-friendly process of purchase. Particularly, the present invention provides an apparatus, method and recording medium for icon-based purchase processing which allows a quick purchase of a desired article in response to a user's selection of a specific icon corresponding to the desired article at a user's terminal.

Additionally, the present invention provides an apparatus, method and recording medium for icon-based purchase processing which allows simply adjusting a purchase quantity based on the number of actions for selecting an article icon at a user's terminal and thus improves user experience in electronic commerce.

According to an embodiment of the present invention, a method for icon-based purchase processing implemented by a terminal may include steps of creating an article icon associated with a purchasable article; storing a mapping correlation between identification information about the article icon and purchase information required for purchase of the article; confirming a user's purchase intention depending on whether the article icon is selected; and if the user's purchase intention is confirmed, performing purchase processing for the article, based on the purchase information, by interworking with a service apparatus for selling the article.

In the method, the purchase information may include at least one of payment information, user identification information, article information, seller information, article quantity information, and shopping mall site information.

In the method, the step of confirming the user's purchase intention may include determining a purchase quantity and a resultant purchase price, based on the number of actions for selecting the article icon.

In the method, the step of confirming the user's purchase intention may further include displaying the determined purchase quantity and price in connection with the selected article icon.

In the method, the step of confirming the user's purchase intention may further include adjusting the purchase quantity in response to a first type selecting action and determining purchase in response to a second type selecting action.

The method may further include steps of receiving authentication information through a user's input; and authenticating a normal user by comparing the received authentication information with stored authentication information. In this case, the purchase processing may be performed when the normal user is authenticated.

According to an embodiment of the present invention, a method for icon-based purchase processing implemented by a service apparatus may include steps of creating an article icon associated with a purchasable article; offering the created article icon to a terminal; storing a mapping correlation between identification information about the article icon and purchase information required for purchase of the article; receiving selection information about the article icon from the terminal; confirming a user's purchase intention depending on the received selection information; and if the user's purchase intention is confirmed, performing purchase processing for the article, based on the purchase information.

In the method, the purchase information may include at least one of payment information, user identification information, article information, seller information, article quantity information, and shopping mall site information.

In the method, the selection information may include at least one of the identification information about the article icon, the number of actions for selecting the article icon, and a type of an action for selecting the article icon.

In the method, the step of confirming the user's purchase intention may include determining a purchase quantity and a resultant purchase price, based on the number of actions for selecting the article icon.

In the method, the step of confirming the user's purchase intention may further include offering, to the terminal, a display form of the determined purchase quantity and price in connection with the selected article icon.

In the method, the step of confirming the user's purchase intention may further include adjusting the purchase quantity in response to a first type selecting action and determining purchase in response to a second type selecting action.

The method may further include step of receiving authentication information through a user's input from the terminal; and authenticating a normal user by comparing the received authentication information with stored authentication information. In this case, the purchase processing may be performed when the normal user is authenticated.

According to an embodiment of the present invention, a computer-readable recording medium having, recorded thereon, a program executing one of the above methods.

According to an embodiment of the present invention, a terminal may include a communication unit configured to communicated with a service apparatus through a communication network; a memory unit configured to store a mapping correlation between identification information about an article icon associated with a purchasable article and purchase information required for purchase of the article; a display unit configured to display the article icon; and a control unit configured to create the article icon, to control the display unit to display the article icon, to confirm a user's purchase intention depending on whether the displayed article icon is selected, and if the user's purchase intention is confirmed, to perform purchase processing for the article, based on the purchase information, by interworking with a service apparatus for selling the article.

In the terminal, the control unit may be further configured to receive authentication information through a user's input before or during the purchase processing, and to authenticate a normal user by comparing the received authentication information with stored authentication information.

According to an embodiment of the present invention, a service apparatus may include a service communication unit configured to transmit or receive data to or from at least one terminal through a communication network; a service storage unit configured to store a mapping correlation between identification information about an article icon associated with a purchasable article and purchase information required for purchase of the article; and a service control unit configured to create the article icon, to offer the created article icon to the terminal through the service communication unit, to receive selection information about the article icon from the terminal through the service communication unit, to confirm a user's purchase intention depending on the received selection information, and if the user's purchase intention is confirmed, to perform purchase processing for the article, based on the purchase information.

In the service apparatus, the service control unit may be further configured to receive authentication information through a user's input from the terminal before or during the purchase processing, and to authenticate a normal user by comparing the received authentication information with stored authentication information.

According to various embodiments of this invention, unlike typical purchase processing that requires many complicated steps such as moves to several pages and repeated inputs of the same data, a simplified, convenient and user-friendly process of purchase is provided to allow a quick purchase of a desired article in response to a user's selection of a specific icon corresponding to the desired article at a user's terminal.

Also, according to embodiments of this invention, it is possible to simply adjust a purchase quantity based on the number of actions for selecting an article icon at a user's terminal. This can improve user experience in electronic commerce.

### BRIEF DESCRIPTION OF THE DRAWINGS

FIG. 1 is a schematic diagram illustrating a system for providing icon-based purchase processing according to embodiments of the present invention.
FIG. 2 is a block diagram illustrating a terminal for providing icon-based purchase processing according to embodiments of the present invention.
FIG. 3 is a block diagram illustrating a service apparatus for providing icon-based purchase processing according to embodiments of the present invention.
FIG. 4 is a diagram illustrating a mapping table that defines a correlation between article icon identification information and purchase information according to an embodiment of the present invention.
FIG. 5 is a flow diagram illustrating a method for providing icon-based purchase processing to embodiments of the present invention.
FIG. 6 is a flow diagram illustrating a method for providing icon-based purchase processing at a terminal to an embodiment of the present invention.
FIG. 7 is a flow diagram illustrating a method for providing icon-based purchase processing at a service apparatus to another embodiment of the present invention.
FIGS. 8A and 8B are exemplary diagrams illustrating a user interface screen of a terminal for icon-based purchase processing according to an embodiment of the present invention.
FIG. 9 is an exemplary diagram illustrating a user interface screen of a terminal for user authentication according to an embodiment of the present invention.
FIG. 10 is an exemplary diagram illustrating a user interface screen of a terminal provided after the completion of purchase processing according to an embodiment of the present invention.
FIG. 11 is a block diagram illustrating an operating environment of an apparatus for icon-based purchase processing according to an embodiment of the present invention.

### DETAILED DESCRIPTION

Now, embodiments of the present invention will be described with reference to the accompanying drawings.

In the following description and the accompanying drawings, however, well known techniques may not be described or illustrated in detail to avoid obscuring the subject matter of the present invention. Through the drawings, the same or similar reference numerals denote corresponding features consistently.

The terms and words used in the following description, drawings and claims are not limited to the bibliographical meanings and are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

The expression "1", "2", "first", or "second" used in various embodiments of this disclosure may modify various elements of such embodiments but does not limit the corresponding elements. The above expressions do not limit the sequence and/or importance of the elements but may be used for distinguishing one element from other elements. For example, a first device and a second device indicate different devices although both of them are devices. Meanwhile, without departing from the scope of the present disclosure, a first structural element may be referred to as a second structural element. Similarly, the second structural element also may be referred to as the first structural element.

When it is stated that a certain element is "coupled to" or "connected to" another element, the element may be directly coupled or connected to another element, or a new element may exist between both elements. In contrast, when it is stated that a certain element is "directly coupled to" or "directly connected to" another element, a new element does not exist between both elements.

The terms used in describing various embodiments of this disclosure are only examples for describing a specific embodiment but do not limit such embodiments. Singular forms are intended to include plural forms unless the context clearly indicates otherwise. Unless defined differently, all terms used herein, which include technical terminologies or scientific terminologies, have the same meaning as that understood by a person skilled in the art to which the present disclosure belongs. The terms "include", "comprise", and "have" as well as derivatives thereof, mean inclusion without limitation.

In addition, the term "module" or "unit" used herein may refer to an element for performing at least one function, operation, or task and may be implemented by software and/or hardware. A plurality of modules or units may be configured to reside on an addressable storage medium and configured to execute on one or more processors.

Now, an apparatus, method and recording medium for icon-based purchase processing according to embodiments of the present invention will be described with reference to the accompanying drawings.

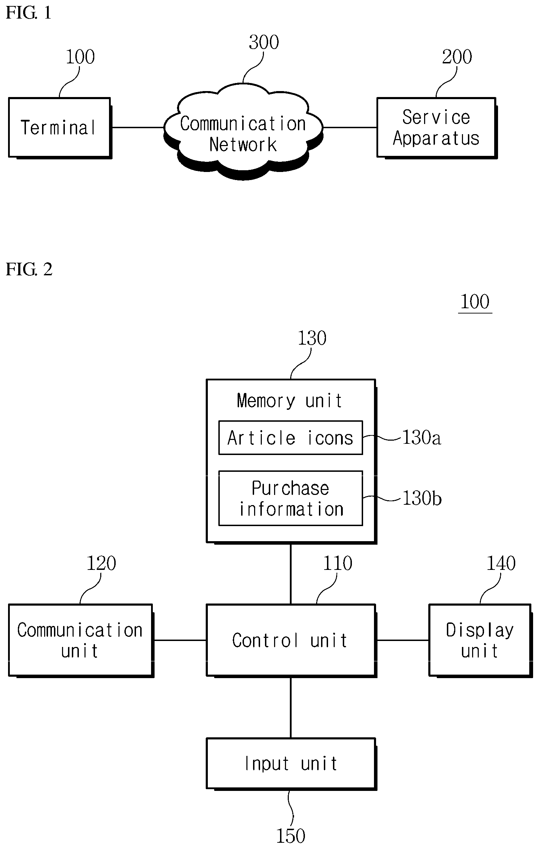

FIG. 1 is a schematic diagram illustrating a system for providing icon-based purchase processing according to embodiments of the present invention.

Referring to FIG. 1, the system for providing icon-based purchase processing may include a terminal 100, a service apparatus 200, and a communication network 300.

In the system, the terminal 100 refers to an electronic device of a user who uses electronic commerce including icon-based purchase processing, and the service apparatus 200 refers to an electronic device of a service provider which provides such electronic commerce.

Each of the terminal 100 and the service apparatus 200 has one or more processors equipped therein. This processor may process program commands for executing a method of this invention and thereby perform particular functions of this invention to be described below. This processor may be a single-threaded processor in one embodiment and a multi-threaded processor in another embodiment. Further, this processor may process commands stored in a memory or storage.

Specifically, the terminal 100 performs operations of transmitting and receiving data for icon-based purchase processing by interworking with the service apparatus 200 through the communication network 300.

The terminal 100 creates an article icon associated with a purchasable article in response to a user's request. Identification information about the created article icon is mapped to purchase information required for purchase of a corresponding article, and a mapping correlation between the identification information and the purchase information is stored.

The article icon may be created uniquely according to a combination of a user and an article. Namely, the article icon identification information may have a unique value according to a combination of user identification information and article information. Therefore, even if several article icons can be created for the same article at the request of two or more users, each of the created article icons may have unique identification information corresponding to each user. Similarly, even if some article icons can be created for some articles at the request of one user, each of the created article icons may have unique identification information corresponding to each article.

The purchase information may include at least one of payment information, user identification information, article information, seller information, article quantity information, and shopping mall site information (e.g., a site name, URL, or domain name. The purchase information may be stored in the terminal 100 in the form of the above-mentioned mapping correlation.

Additionally, the terminal 100 confirms a user's purchase intention depending on whether a certain article icon is selected by a user. When the user's purchase intention is confirmed, the terminal 100 performs purchase processing for a specific article corresponding to the selected article icon, based on the purchase information.

When confirming the user's purchase intention, the terminal 100 may determine a purchase quantity and a resultant purchase price, based on the number of actions for selecting the article icon. Further, the terminal 100 may display, in a perceivable form, the determined purchase quantity and price in connection with the selected article icon.

Additionally, before or during the above-mentioned purchase processing, the terminal 100 may perform user authentication so as to determine whether a user is a normal user. Namely, the terminal 100 may receive authentication information through a user's input and then compare the received authentication information with stored authentication information. The purchase processing may be performed when the normal user is authenticated.

After the purchase processing is completed, the terminal 100 may display a purchase result screen, e.g., in the form of a popup message.

Meanwhile, the service apparatus 200 performs operations of transmitting and receiving data for icon-based purchase processing by communicating with the terminal 100 through the communication network 300. The service apparatus 200 may be a server that operates an electronic commerce service, e.g., an open market for intermediating transactions between a seller and a customer, an online shopping mall constructed by a seller, or a social commerce service for a group purchase, based on the communication network 300.

In one embodiment, the service apparatus 200 may receive a purchase request signal from the terminal 100 and then perform purchase processing. In this case, the terminal 100 creates an article icon, stores corresponding purchase information, and if purchase is determined in response to a user's selection of the article icon, sends the purchase request signal to the service apparatus 200.

In another embodiment, instead of the terminal 100, the service apparatus 200 may create the article icon and register the purchase information.

Namely, the service apparatus 200 creates an article icon in response to a user's request and then offers the created article icon (i.e., an image, identification information, etc. thereof) to the terminal 100. As discussed above, the article icon identification information may have a unique value according to a combination of user identification information and article information. Also, a mapping correlation between the identification information and the purchase information may be stored in the service apparatus 200. When any icon selection information is received from the terminal 100, the service apparatus 200 may perform purchase processing and then return a purchase result to the terminal 100.

Such icon selection information may include at least one of identification information about the selected article icon, the number of actions for selecting the article icon, and a type of an action for selecting the article icon.

The communication network 300 performs a function to deliver or exchange data or information between the terminal 100 and the service apparatus 200. The communication network 300 may use various forms of communication networks, for example, wireless communication manners, such as WLAN (Wireless LAN), Wi-Fi, Wibro, Wimax, and HSDPA (High Speed Downlink Packet Access), or wired communication manners, such as Ethernet, xDSL (ADSL, VDSL), HFC (Hybrid Fiber Coaxial cable), FTTC (Fiber to the Curb), and FTTH (Fiber to the Home). Meanwhile, the communication network 300 is not limited to the above examples and may use any other communication manner well known or to be developed.

The terminal 100 is capable of transmitting and receiving various kinds of data via the communication network 300 in response to user's manipulations. The terminal 100 may be one of a tablet PC, a laptop, a personal computer (PC), a smart phone, a personal digital assistant (PDA), a smart TV, a mobile communication terminal, and the like.

Additionally, the terminal 100 may perform voice or data communication using the communication network 300 and include a memory for storing a browser for communication with the service apparatus 200 via the communication network 300, a microprocessor for performing calculation and control by executing various kinds of programs, and the like.

As discussed above and will be described below, through interworking between the terminal 100 and the service apparatus 200, this invention allows a user to simply purchase a desired article by merely selecting a corresponding icon.

Hereinafter, embodiments of this invention will be described in more detail with reference to FIGS. 2 to 10.

At the outset, FIG. 2 is a block diagram illustrating a terminal for providing icon-based purchase processing according to embodiments of the present invention.

Referring to FIG. 2, the terminal 100 includes, but not limited to, a control unit 110, a communication unit 120, a memory unit 130, a display unit 140, and an input unit 150. In particular, the memory unit 130 may have article icons 130a and purchase information 130b about articles.

The control unit 110 may be a processor for controlling an operating system (OS) and respective elements. The control unit 110 may totally control the terminal 100 and, especially, control operations associated with purchase processing based on an article icon with regard to a selected article.

Specifically, the control unit 110 creates an article icon in response to a user's request entered through the input unit 150, confirms user's purchase intention depending on selection of the created article icon, and performs purchase processing by interworking with the service apparatus 200 based on mapping information.

Confirmation of purchase intention may include adjusting a purchase quantity of a selected article icon and thereby determining a purchase price. The control unit 110 may control the purchase quantity and price to be displayed in connection with the selected article icon. Also, depending on types of a user's action for selecting the article icon, the control unit 110 may adjust the purchase quantity or determine purchase.

Additionally, the control unit 110 may control a process of authenticating a user by comparing authentication information, entered by the user, with stored authentication information.

Also, the control unit 110 may control a process of displaying a purchase result screen on the display unit 140.

The communication unit 120 performs a function of transmitting or receiving data for providing icon-based purchase processing by communicating with the service apparatus 200 through the communication network 300.

Additionally, the communication unit 120 may include at least one of a wireless communication module (not shown) and a wired communication module (not shown). The wireless communication module is configured for transmission and reception of data, based on suitable wireless communication technique. In case of using wireless communication, the terminal 100 may transmit or receive data to or from the service apparatus 200 by using one of a radio network communication module, a WLAN communication module, and a WPAN communication module. Also, the wired communication module is configured for transmission and reception of data, based on proper wired communication technique. The wired communication module may access the communication network 300 through a wire and then transmit or receive data to or from the service apparatus 200.

The memory unit 130 includes a main memory unit and an auxiliary memory unit. The memory unit 130 is configured to store programs required for the operation of the terminal 100 and also store related data, thus including a program region and a data region. Particularly, the memory unit 130 stores an operating system for booting the terminal 100, a program for providing icon-based purchase processing, user authentication information, and the like.

Additionally, the memory unit 130 stores the article icons 130a regarding purchasable articles and the purchase information 130b about such articles. The article icon 130a may include identification information thereof. The purchase information 130b may include at least one of payment information, user identification information, article information, seller information, article quantity information, and shopping mall site information (e.g., a site name, URL, or domain name).

Also, the memory unit 130 may store authentication information to be used for authenticating a normal user.

The display unit 140 is configured to display information about operating states and results of the terminal 100. Also, the display unit 140 may display a menu of the terminal 100 and user data entered by the user.

The display unit 140 may be formed of LCD (Liquid Crystal Display), TFT-LCD (Thin Film Transistor LCD), LED (Light Emitting Diode), OLED (Organic LED), AMOLED (Active Matrix OLED), retina display, flexible display, 3-dimensional display, or the like. In case the display unit 140 is formed of a touch screen, the display unit 140 may perform all or parts of functions of the input unit 150.

Specifically, under the control of the control unit 110, the display unit 140 may display the article icons 130a created and stored in the memory unit 130, a user's selection of the specific article icon, and a purchase processing state.

Further, the display unit 140 may display, based on a user's selection, a purchase quantity and a resultant price in connection with a selected article icon. The purchase quantity may be adjusted depending on the number of actions for selecting the article icon and also displayed near the article icon together with the price.

For example, if a certain article icon is selected once, the purchase quantity '1' is displayed near the selected article icon. At this time, the price of one article may be also displayed near the selected article icon. If the same article icon is selected twice, the purchase quantity '2' is displayed near the selected article icon and the price of two articles may be also displayed.

Additionally, the display unit 140 may display an input window used for entering authentication information for user authentication. Also, the display unit 140 may display authentication results on a screen.

If purchase processing is completed, the display unit 140 may display a purchase result through a popup message. Alternatively, the purchase result may be displayed in connection with the article icon displayed on the screen. Namely, the article icon corresponding to the purchased article may be changed in color or shape.

The input unit 150 is configured to receive user's manipulation for entering various kinds of information and setting or controlling various functions of the terminal 100, to create a corresponding input signal, and to deliver the input signal to the control unit 110.

The input unit 150 may include a keypad and/or a touch pad. Also, the input unit 150 formed of a touch panel may be integrated with the display unit 140 formed of a display panel to constitute a touch screen. The input unit 150 may use various input mechanisms such as a keyboard, a mouse, a joystick, a jog wheel, a touch-sensitive unit, a gesture or image detection unit, a voice recognition unit, and the like.

Additionally, the input unit 150 may receive authentication information from the user and then deliver it to the control unit 110. Also, the input unit 150 may detect a user's selection of an article icon and then deliver it to the control unit 110.

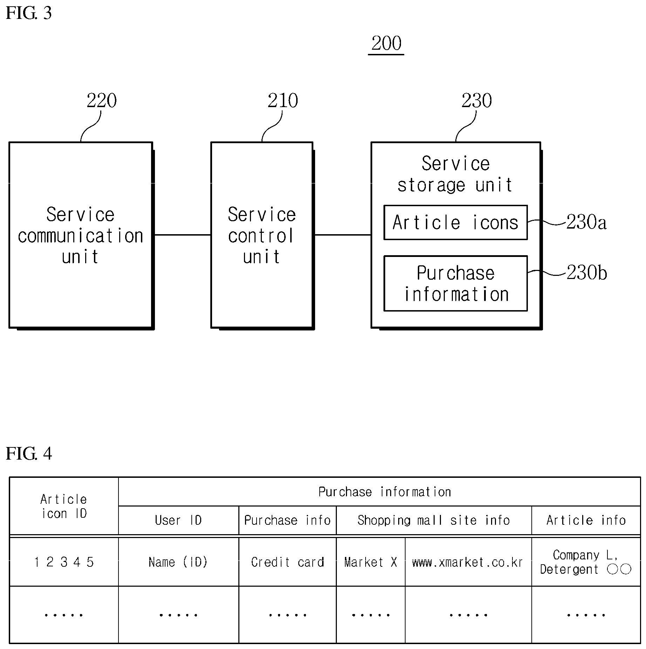

FIG. 3 is a block diagram illustrating a service apparatus for providing icon-based purchase processing according to embodiments of the present invention.

Referring to FIG. 3, the service apparatus 200 includes a service control unit 210, a service communication unit 220, and a service storage unit 230. In particular, the service storage unit 230 may have article icons 230a and purchase information 230b about articles.

The service communication unit 220 transmits and receives data for icon-based purchase processing by communicating with the terminal 100 through the communication network 300.

The service storage unit 230 stores all programs for icon-based purchase processing.

Particularly, the service storage unit 230 stores the article icons 230a regarding purchasable articles and the purchase information 230b about such articles, together with a mapping table therebetween. The article icon 230a may include identification information thereof. The purchase information 230b may include at least one of payment information, user identification information, article information, seller information, article quantity information, and shopping mall site information (e.g., a site name, URL, or domain name).

Also, the service storage unit 230 may store authentication information to be used for authenticating a normal user.

The service control unit 210 may be a processor for controlling an operating system (OS) and respective elements.

In one embodiment, the service control unit 210 receives a purchase request signal caused by selection of a specific article icon from the terminal 100 and then performs purchase processing.

In another embodiment, the service control unit 210 may receive a request signal for creating an article icon from the terminal 100, create the requested article icon, and then offer the created article icon to the terminal 100. At this time, article icon related information including an image of the article icon and identification information about the article icon is transmitted.

Thereafter, the service control unit 210 receives selection information about a specific article icon from the terminal 100, confirms user's purchase intention, and performs purchase processing based on mapping information.

Confirmation of purchase intention may include adjusting a purchase quantity of a selected article icon and thereby determining a purchase price. The service control unit 210 may offer, to the terminal 100, the purchase quantity and price in connection with the selected article icon.

The selection information received from the terminal 100 may include at least one of article icon identification information, the number of actions for selecting a specific article icon, and the type of a user's action for selecting the specific article icon.

Additionally, the service control unit 210 may receive authentication information, entered by the user, from the terminal 100 and perform a process of authenticating the user by comparing the received authentication information with stored authentication information.

Also, when the purchase processing is finished, the service control unit 210 may offer a purchase result to the terminal 100.

Meanwhile, the memory or storage unit equipped in the terminal 100 or service apparatus 200 stores information therein. In embodiments, the memory or storage unit is a computer-readable medium. The memory or storage unit may be a volatile memory unit in one embodiment and may be a nonvolatile memory unit in another embodiment. In various embodiments, the memory or storage unit may include, for example, a hard disk device, an optical disk device, or any other high-volume storage device.

Although this description and drawings illustrate exemplary device elements, the subject matters and functional operations disclosed herein may be implemented by different type digital electronic circuits or implemented by computer software, firmware or hardware including a structure disclosed herein and structural equivalent thereof, or any combination thereof. The subject matters disclosed herein may be implemented by at least one computer program product, namely at least one module regarding computer program commands encoded on a program storage medium so as to control the operation of a device according to this invention or allow execution thereby. A computer-readable medium may be a machine-readable storage device, a machine-readable storage board, a memory device, a machine-readable composition of material affecting wave-type signaling, or a combination thereof.

FIG. 4 is a diagram illustrating a mapping table that defines a correlation between article icon identification information and purchase information according to an embodiment of the present invention.

The mapping table as shown in FIG. 4 may be stored in the memory unit 130 of the terminal 100 in one embodiment, or stored in the service storage unit 230 of the service apparatus 200 in another embodiment.

Specifically, the article icon identification information refers to unique information about each article icon. The article icon identification information may have a unique value according to a combination of a user and an article.

The purchase information refers to necessary information for purchase of a certain article. The purchase information may include at least one of payment information, user identification information, article information, seller information, article quantity information, and shopping mall site information. The shopping mall site information may contain a shopping name and a shopping mall address (or link information).

Using this mapping table that defines a correlation between the article icon identification information and the purchase information, a simple purchase can be performed in response to a mere selection of a desired article icon.

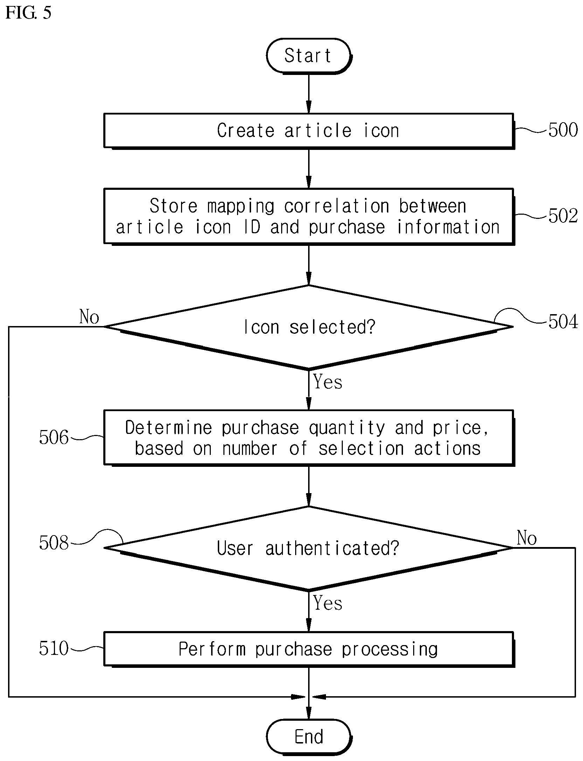

FIG. 5 is a flow diagram illustrating a method for providing icon-based purchase processing to embodiments of the present invention.

Referring to FIG. 5, at step 500, the terminal 100 or the service apparatus 200 creates an article icon.

At step 502, a correlation between article icon identification information and purchase information is stored as a mapping table. The purchase information may include at least one of payment information, user identification information, article information, seller information, article quantity information, and shopping mall site information (e.g., a site name, URL, or domain name). The mapping table is stored in the memory unit 130 of the terminal 100 in one embodiment or stored in the service storage unit 230 of the service apparatus 200 in another embodiment.

At step 504, the terminal 100 checks whether any article icon is selected. Until the selection of an article icon is detected, the terminal 100 may be placed in an idle state or perform other given task.

If any article icon is selected, the terminal 100 determines at step 506 a purchase quantity and a resultant purchase price, based on the number of actions for selecting the article icon. In another embodiment, at this step, the service apparatus 200 determines a purchase quantity and a resultant purchase price, based on selection information, including the number of actions for selecting the article icon, received from the terminal 100.

At step 508, the terminal 100 or the service apparatus 200 performs user authentication by comparing authentication information, received through a user's input, with stored authentication information.

If a normal user is authenticated at step 508, the terminal 100 performs purchase processing by interworking with the service apparatus 200 at step 510. In another embodiment, at this step, the service apparatus 200 performs purchase processing.

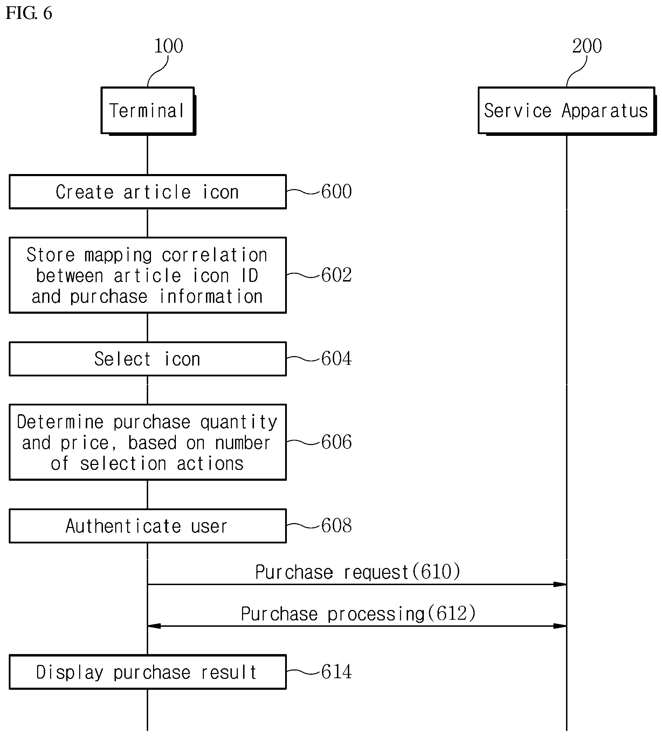

FIG. 6 is a flow diagram illustrating a method for providing icon-based purchase processing at a terminal to an embodiment of the present invention.

Referring to FIG. 6, at step 600, the terminal 100 creates and stores an article icon in response to a user's request.

At step 602, the terminal 100 stores, in the memory unit 130, a mapping correlation between article icon identification information and purchase information. The purchase information may include at least one of payment information, user identification information, article information, seller information, article quantity information, and shopping mall site information (e.g., a site name, URL, or domain name).

At step 604, the terminal 100 receives a user's action for selecting a certain article icon through the input unit 150. Then, at step 606, the terminal 100 determines a purchase quantity and a resultant purchase price, based on the number of such selecting actions. The determined purchase quantity and price are displayed on the display unit 140 in a perceivable form in connection with the selected article icon.

At step 608, the terminal 100 performs user authentication. Namely, the terminal 100 receives a user's input for entering authentication information through the input unit 150 and then compares the received authentication information with stored authentication information. If both are identical with each other, the terminal 100 authenticates a user as being a normal user.

At step 610, the terminal 100 transmits a purchase request signal to the service apparatus 200 through the communication network 300. Then, at step 612, purchase processing is performed through interworking between the terminal 100 and the service apparatus 200.

When the purchase processing is completed, the terminal 100 displays a purchase result at step 614. The purchase result may be displayed in the form of a popup message.

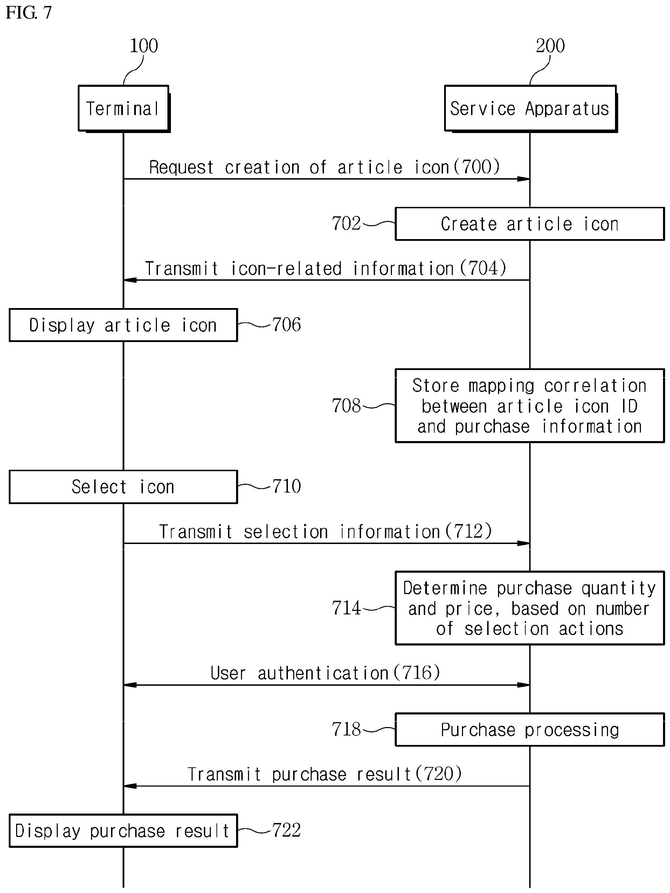

FIG. 7 is a flow diagram illustrating a method for providing icon-based purchase processing at a service apparatus to another embodiment of the present invention.

Referring to FIG. 7, the service apparatus 200 receives a request signal for creating an article icon from the terminal 100 at step 700 and then creates the requested article icon at step 702.

At step 704, the service apparatus 200 transmits article icon related information to the terminal 100. Specifically, the article icon related information may contain an image, identification information and the like of the created article icon. Then, at step 706, the terminal 100 receives the article icon related information and displays the article icon.

At step 708, the service apparatus 200 stores, in the service storage unit 230, a mapping correlation between article icon identification information and purchase information. The purchase information may include at least one of payment information, user identification information, article information, seller information, article quantity information, and shopping mall site information (e.g., a site name, URL, or domain name). At this step, the service apparatus 200 may receive at least part of the purchase information from the terminal 100. For example, the terminal 100 may offer purchase information input page and receive a user's input of necessary purchase information through the input page. This input of purchase information may be needed only once at the time of creating the article icon.

After a certain article icon is selected at the terminal 100 at step 710, the service apparatus 200 receives icon selection information from the terminal 100 at step 712. The received selection information may include at least one of the identification information about the article icon, the number of actions for selecting the article icon, and a type of an action for selecting the article icon.

At step 714, the service apparatus 200 determines a purchase quantity and a resultant purchase price, based on the number of selection actions. The determined purchase quantity and price are displayed on the terminal 100 in a perceivable form in connection with the selected article icon.

At step 716, the service apparatus 200 performs user authentication. Namely, the service apparatus 200 receives a user's input of authentication information from the terminal 100 and then compares the received authentication information with stored authentication information. If both are identical with each other, the service apparatus 200 authenticates a user as being a normal user.

Then, the service apparatus 200 performs purchase processing at step 718 and transmits a purchase result to the terminal 100 at step 720. Then, at step 722, the terminal 100 displays the received purchase result. The purchase result may be displayed in the form of a popup message.

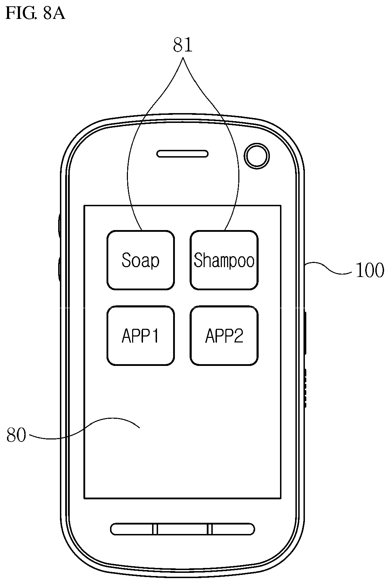

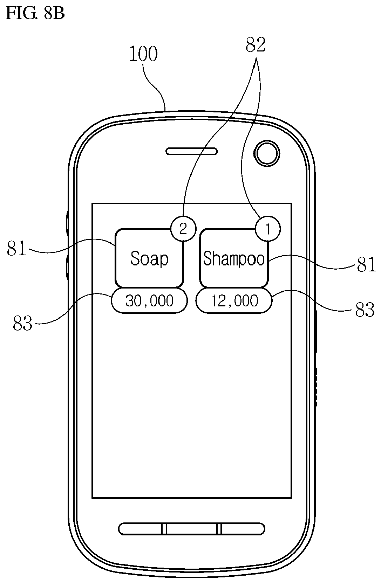

FIGS. 8A and 8B are exemplary diagrams illustrating a user interface screen of a terminal for icon-based purchase processing according to an embodiment of the present invention.

As shown in FIG. 8A, created article icons 81 may be displayed together with any other execution icon on a background screen 80 of the terminal 100.

When a user selects one of the article icons 81 displayed on the background screen 80, a selection number 82, i.e., the number of actions for selecting the article icon 81, is displayed in connection with the selected article icon 81 as shown in FIG. 8B. Further, price information 83, which varies depending on the selection number 82, may be displayed in connection with the selected article icon 81. As shown in FIG. 8B, the selection number 82 and the price information 83 may be displayed near the corresponding article icon 81. The price information 83 may vary in real time whenever the corresponding article icon 81 is selected.

A quantity selection and final purchase determination may depend on types of a user's input action.

For example, a user may take a touch action with regard to the article icon 81 on the touch screen. If a user's touch action is shorter than a given time, this action may be regarded as an input of increasing a purchase quantity. Namely, whenever a touch count is increased, the purchase quantity and resultant price are increased accordingly. In contrast, if a user's touch action is longer than a given time, this action may be regarded as an input of determining purchase. Meanwhile, if a certain article icon 81 is touched longer without any selection of quantity, purchase processing may be performed on the basis of a default quantity (e.g., one). This default quantity or an initial purchase quantity may be defined by user's setting and applied to purchase information.

In another example, a user may take a click action with regard to the article icon 81 by using a mouse or key. In case of a single click, a purchase quantity and resultant price may be increased in proportion to the number of clicks. In case of a double click, purchase may be determined with selected quantity and price and then purchase processing may be performed.

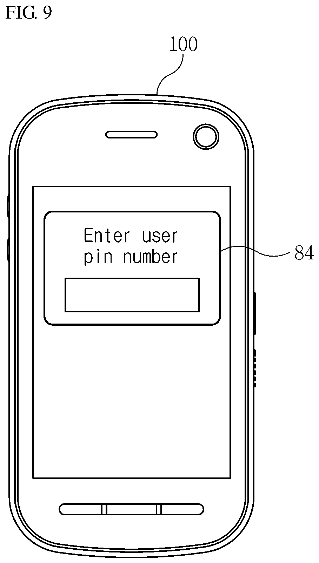

FIG. 9 is an exemplary diagram illustrating a user interface screen of a terminal for user authentication according to an embodiment of the present invention.

Referring to FIG. 9, before or while purchase processing is performed with regard to the selected article icon, user authentication may be performed to check whether a user is a normal user.

For example, the terminal 100 may display a screen for user authentication and receive an input of user authentication information such as a pin number. Then the terminal 100 may compare the received user authentication information with preregistered user authentication information so as to authenticate a user as being a normal user. After the user is authenticated, purchase processing is completed.

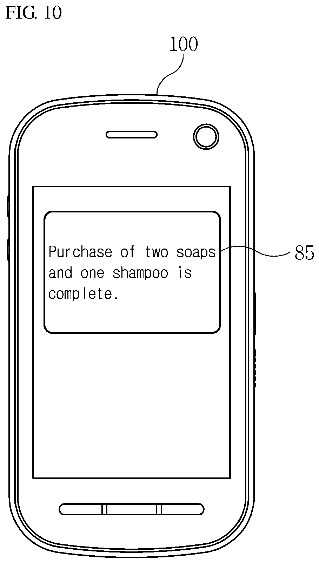

FIG. 10 is an exemplary diagram illustrating a user interface screen of a terminal provided after the completion of purchase processing according to an embodiment of the present invention.

The icon-based purchase processing according to this invention is performed automatically in response to only a simple selection of an article icon. When the purchase processing is completed, a purchase result may be displayed on the terminal 100 through a popup message 85 as shown in FIG. 10. Alternatively, the purchase result may be displayed in connection with the article icon 81 displayed on the background screen 80. Namely, the article icon 81 corresponding to the purchased article may be changed in color or shape.

The icon-based purchase processing discussed hereinbefore according to this invention may be applied to various kinds of electronic commerce services.

There are various, currently available electronic commerce services, such as an open market, an online shopping mall, and a social commerce, depending on an operating party, transacting parties, a transacting manner, and the like. Among them, the open market enables third parties to provide a platform which allows a direct transaction between a seller and a consumer. Namely, through this platform, sellers and consumers can register goods to be directly traded and conduct mutual direct electronic commerce. In case of the online shopping mall, a seller or an online shopping mall operator creates a transaction site in which items to be sold are registered, and a user is connected to the site to sell the goods. In addition, the social commerce is an e-commerce using social networks, and provides information on sales of goods through a social network to consumers. In this case, it is provided as a joint purchase type in which prices are discounted according to the number of buyers.

The present invention is applicable to such various kinds of electronic commerce.

For example, in case of the social commerce type, if a user specifies a desired article only and then creates an article icon for the article, a service provider can offer real-time price information varying in association with the article through the article icon displayed on the user side. And the user can check the price of the article through this and request a purchase at a desired time.

Also, in case of the open market, by creating article icons according to combinations of an article, a user and a seller, the user can specify and easily purchase a frequently purchased article of a specific seller.

The icon-based article purchase processing method described above can be implemented through a computing environment.

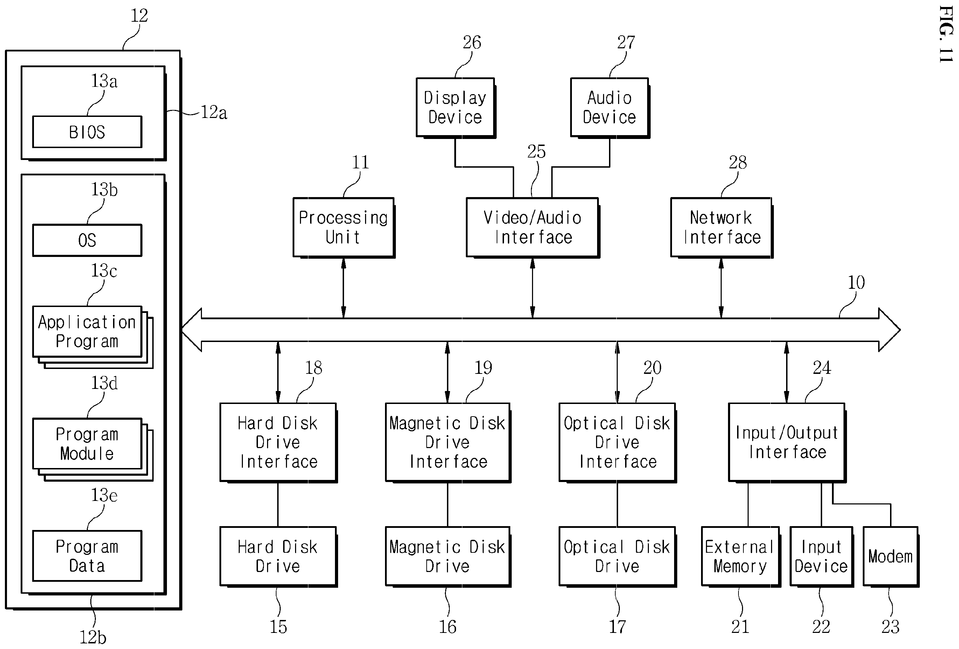

FIG. 11 is a block diagram illustrating an operating environment of an apparatus for icon-based purchase processing according to an embodiment of the present invention.

FIG. 11 and the following discussion are intended to provide a brief, general description of an example suitable computing environment in which the invention may be implemented. Although not required (e.g., when implemented in hardware), the invention will be described in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

Referring to FIG. 11, an exemplary computing system for implementing the invention includes a processing unit 11, a system memory 12, and a system bus 10 that couples various system components including the system memory 12 to the processing unit 11.

The processing unit 11 can execute computer-executable instructions designed to implement features of this invention.

The system bus 10 may be any of several, types of bus structures including a memory bus or memory controller, a peripheral bus, and a local bus using any of a variety of bus architectures. The system memory 12 includes read only memory (ROM) 12a and random access memory (RAM) 12b. A basic input/output system (BIOS) 13a, containing the basic routines that help transfer information between elements within computer system, such as during start-up, may be stored in the ROM 12a.

The computing system may also include a storage unit, e.g., a hard disk drive 15 for reading from and writing to a hard disk, a magnetic disk drive 16 for reading from or writing to a magnetic disk, and an optical disk drive 17 for reading from or writing to an optical disk such as a CD-ROM or other optical media. The hard disk drive 15, the magnetic disk drive 16, and the optical disk drive 17 are connected to the system bus 10 by a hard disk drive interface 18, a magnetic disk drive-interface 19, and an optical drive interface 20, respectively.

Additionally, the computing system may further include an external memory 21 as the storage unit. The external memory 21 may be connected to the system bus 10 through an input/output interface 24.

The drives and their associated computer-readable media provide nonvolatile storage of computer-executable instructions, data structures, program modules, and other data for the computing system. Although the example environment described herein employs the hard disk 15, the magnetic disk 16 and the optical disk 17, other types of computer readable media for storing data can be used, including magnetic cassettes, flash memory cards, digital versatile disks, Bernoulli cartridges, RAMs, ROMs, and the like.

Program code means including one or more program modules, such as an operating system 13b, one or more application programs 13c, other program modules 13d, and program data 13e, may be stored on the hard disk 15, the magnetic disk 16, the optical disk 17, the ROM 12a, or the RAM 12b.

A user may enter commands and information into the computing system through other input device 22 such as a keyboard, a pointing device, a microphone, a joy stick, a game pad, or the like. This other input device 22 can be connected to the processing unit 11 through the input/output interface 24 coupled to the system bus 10. The input/output interface 24 may logically represent any of a wide variety of different interfaces, such as, for example, a serial port interface, a PS/2 interface, a parallel port interface, a universal serial bus (USB) interface, or an institute of electrical and electronics engineers (IEEE) 1394 interface (i.e., a FireWire interface), or may even logically represent a combination of different interfaces.

Additionally, the computing system may further include a display device 26 such as a monitor or LCD and/or an audio device 27 such as a speaker or a microphone, which are connected to the system bus 10 via a video/audio interface 25. The video/audio interface 25 may include high definition multimedia interface (HDMI), graphics device interface (GDI), or the like.

The computing system is connectable to networks, such as, for example, an office-wide or enterprise-wide computer network, a home network, an intranet, and/or the Internet. The computing system can exchange data with external sources, such as, for example, remote computer systems, remote applications, and/or remote databases over such networks.

The computing system includes a network interface 28, through which the computing system receives data from external sources and/or transmits data to external sources. The network interface 28 facilitates the exchange of data with remote devices. For example, if the computing system is the terminal 100, the terminal 100 may transmit or receive information to or from the service apparatus 200 through the network interface 28. If the computing system is the service apparatus 200, the service apparatus 200 may transmit or receive information to or from the terminal 100 through the network interface 28. The network interface 28 can logically represent one or more software and/or hardware modules, such as, for example, a network interface card and corresponding network driver interface specification (NDIS) stack.

Likewise, the computing system receives and/or transmits data from and/or to external sources through the input/output interface 24. The input/output interface 24 is coupled to a modem 23 (e.g., a standard modem, a cable modem, or a digital subscriber line (DSL) modem), through which the computing system receives data from and/or transmits data to external sources.

While FIG. 11 represents a suitable operating environment for the present invention, the principles of the present invention may be employed in any system that is capable of, with suitable modification if necessary, implementing the principles of the present invention. The environment illustrated in FIG. 11 is illustrative only and by no means represents even a small portion of the wide variety of environments in which the principles of the present invention may be implemented.

Various kinds of information generated during the execution of a beacon-based payment service at the beacon service system of this invention may be stored and accessed from any of the computer-readable media associated with the computing system as shown in FIG. 11. For example, portions of such modules and portions of associated program data may be included in the operating system 13b, the application programs 13c, the program modules 13d and/or the program data 13e, for storage in the system memory 12.

When a mass storage device such as the hard disk is coupled to the computing system, such modules and associated program data may also be stored in the mass storage device. In a networked environment, program modules depicted relative to the computing system, or portions thereof, can be stored in a remote computer system connected through the modem 23 or network interface 25 of the input/output interface 24. Execution of such modules may be performed in a distributed environment as previously described.

While the specification contains many specific implementation details, these should not be construed as limitations on the scope of any disclosure or of what may be claimed, but rather as descriptions of features that may be specific to particular embodiments of particular disclosures. Certain features that are described in the specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Also, although the present specifications describe that operations are performed in a predetermined order with reference to a drawing, it should not be construed that the operations are required to be performed sequentially or in the predetermined order, which is illustrated to obtain a preferable result, or that all of the illustrated operations are required to be performed. In some cases, multi-tasking and parallel processing may be advantageous. Also, it should not be construed that the division of various system components are required in all types of implementation. It should be understood that the described program components and systems are generally integrated as a single software product or packaged into a multiple-software product.

While this disclosure has been particularly shown and described with reference to an exemplary embodiment thereof, it will be understood by those skilled in the art that various changes in form and details may be made therein without departing from the scope of this disclosure as defined by the appended claims.

The present invention has a good possibility of sales on the market or business and also has industrial applicability suitable for practical and apparent implementation.

## Claims

1. A method for icon-based purchase processing implemented by a terminal, the method comprising steps of:
creating an article icon associated with a purchasable article;
storing a mapping correlation between identification information about the article icon and purchase information required for purchase of the article;
confirming a user's purchase intention depending on whether the article icon is selected; and
if the user's purchase intention is confirmed, performing purchase processing for the article, based on the purchase information, by interworking with a service apparatus for selling the article.

2. The method of claim 1, wherein the purchase information includes at least one of payment information, user identification information, article information, seller information, article quantity information, and shopping mall site information.

3. The method of claim 1, wherein the step of confirming the user's purchase intention includes determining a purchase quantity and a resultant purchase price, based on the number of actions for selecting the article icon.

4. The method of claim 3, wherein the step of confirming the user's purchase intention further includes displaying the determined purchase quantity and price in connection with the selected article icon.

5. The method of claim 3, wherein the step of confirming the user's purchase intention further includes adjusting the purchase quantity in response to a first type selecting action and determining purchase in response to a second type selecting action.

6. The method of claim 1, further comprising steps of:
receiving authentication information through a user's input; and
authenticating a normal user by comparing the received authentication information with stored authentication information,
wherein the purchase processing is performed when the normal user is authenticated.

7. A method for icon-based purchase processing implemented by a service apparatus, the method comprising steps of:
creating an article icon associated with a purchasable article;
offering the created article icon to a terminal;
storing a mapping correlation between identification information about the article icon and purchase information required for purchase of the article;
receiving selection information about the article icon from the terminal;
confirming a user's purchase intention depending on the received selection information; and
if the user's purchase intention is confirmed, performing purchase processing for the article, based on the purchase information.

8. The method of claim 7, wherein the purchase information includes at least one of payment information, user identification information, article information, seller information, article quantity information, and shopping mall site information.

9. The method of claim 7, wherein the selection information includes at least one of the identification information about the article icon, the number of actions for selecting the article icon, and a type of an action for selecting the article icon.

10. The method of claim 7, wherein the step of confirming the user's purchase intention includes determining a purchase quantity and a resultant purchase price, based on the number of actions for selecting the article icon.

11. The method of claim 10, wherein the step of confirming the user's purchase intention further includes offering, to the terminal, a display form of the determined purchase quantity and price in connection with the selected article icon.

12. The method of claim 10, wherein the step of confirming the user's purchase intention further includes adjusting the purchase quantity in response to a first type selecting action and determining purchase in response to a second type selecting action.

13. The method of claim 7, further comprising step of:
receiving authentication information through a user's input from the terminal; and
authenticating a normal user by comparing the received authentication information with stored authentication information,
wherein the purchase processing is performed when the normal user is authenticated.

14. A computer-readable recording medium having, recorded thereon, a program executing the method of one of claims 1 to 13.

15. A service apparatus comprising:
a service communication unit configured to transmit or receive data to or from at least one terminal through a communication network;
a service storage unit configured to store a mapping correlation between identification information about an article icon associated with a purchasable article and purchase information required for purchase of the article; and
a service control unit configured to create the article icon, to offer the created article icon to the terminal through the service communication unit, to receive selection information about the article icon from the terminal through the service communication unit, to confirm a user's purchase intention depending on the received selection information, and if the user's purchase intention is confirmed, to perform purchase processing for the article, based on the purchase information.
